## Europäisches Patentamt
## European Patent Office
## Office européen des brevets

(19)

(11) Publication number: **0 129 446**

**A2**

(12) **EUROPEAN PATENT APPLICATION**

(21) Application number: **84304179.9**

(22) Date of filing: **20.06.84**

(51) Int. Cl.³: **H 04 N 1/46**

(30) Priority: **21.06.83 US 506181**
**27.02.84 US 584196**

(43) Date of publication of application:
**27.12.84 Bulletin 84/52**

(84) Designated Contracting States:
**CH DE FR GB IT LI**

(71) Applicant: **HAZELTINE CORPORATION**
**500 Commack Road**
**Commack New York 11725(US)**

(72) Inventor: **Eisenhuth, Arthur J.**
**904 Alan Drive**
**Wantagh New York 11793(US)**

(74) Representative: **Wood, Anthony Charles et al,**
**c/o MICHAEL BURNSIDE & PARTNERS 2 Serjeants' Inn**
**Fleet Street**
**London EC4Y 1HL(GB)**

(54) **Automatic color analysis based on minimum/maximum video level.**

(57) A color film analyser (100) having a plurality of adjustable control elements (121). The elements act on color representative video signals (106, 113, $V_0$) which are derived from a film (50) being analyzed. The elements vary a video characteristic of the video signals and thereby vary the display (108) of the video signal generated by the analyzer. Peak detectors (200) detect the video level of the color representative video signals. The detected peaks are converted into digital information (300, 301) and compared (400) to a reference. The reference is derived from underexposed, overexposed and properly exposed reference films. The control elements are automatically adjusted (403) in response to the results of the comparison.

FIG. 2

DOCKET H4328.07
  FRA:mfk

AUTOMATIC COLOR ANALYSIS BASED
ON MINIMUM/MAXIMUM VIDEO LEVEL

The invention relates generally to automatic color analysis and, in particular, a color analyzer for automatically providing color analysis based on the minimum and/or maximum video level.

Automatic color analysis, particularly as used in an automatic printing process, has been suggested in the prior art in which particular defined areas are detected, averaged and compared to a reference. Such prior art automatic color analysis fails in many situations in enhancing picture quality. Furthermore, such techniques have been unable to accurately and consistently define the necessary correction factors and reference.

It is an object of this invention to provide an apparatus for automatically analyzing a film such as a negative or a positive based on the minimum or maximum video level.

The invention is an apparatus including a color analyzer for analyzing films such as positives and negatives having a plurality of adjustable control elements for acting on color representative video signals derived from the film. The analyzer varies a video signal characteristic and thereby varies the generated display of the video signal. The apparatus according to the invention comprises first means for detecting the video level of the color representative video signals, second means for comparing the detected video level to a predetermined amplitude, and third means responsive to the second means for adjusting the control elements.

For a better understanding of the present invention, together with other and further objects, reference is made to the following description, taken in conjunction with the accompanying drawings, and its scope will be pointed out in the appended claims.

Figures 1 and 4 are functional block diagrams illustrating the analyzer, display and automatic color correction aspects of the invention.

Figures 2 and 5 are detailed functional block diagrams further illustrating the functional aspects of a color analyzer according to the invention as shown in Figures 1 and 4, respectively.

Figures 3 and 6 are diagrams of an automatic printer according to the invention.

The apparatus according to the invention includes analyzers as disclosed in U.S. Patent Nos. 2,976,348; 2,977,407; 3,123,666; 3,128,333; 3,131,252; 3,800,071; 3,800,075. In addition, the apparatus according to the invention may be used in combination with scanners as disclosed in U.S. Patent No. 3,002,048 and process control apparatus as disclosed in U.S. Patent No. 4,300,158.

As used herein, an analyzer refers to a device used in the photofinishing industry to predict the exposure values of various negative and positive material (herein referred to as films). In photofinishing production where it is not possible, because of output quantity requirements, to manually analyze each film, an automatic device which predicts exposure values is a necessity. Such a device is currently used in the amateur photofinishing industry and is useful for lower grades of professional photographic work. When video analysis of each film is possible, automatic analysis provides a preliminary evaluation in comparison which aids the operator in analyzing the film and saves operator time.

The prior art equipment currently in use has been designed around the principle that the average value of a print material is very near a neutral gray. This implies that if the video in each of the yellow, magenta and cyan channels derived from a film in an analyzer are averaged, the average value could be used to predict the correct color balance for creating a print from the film. The basis for this prediction is that a properly balanced image of the print material will produce a neutral gray when the image is integrated. The most difficult part of analyzing, however, is the prediction of the density value. The range of possible exposure values for proper density control is always much greater than that required for proper color balance. As a result, it is difficult, if not impossible to make an accurate prediction using the prior art approaches. In addition, not all pictures integrate to this average grey value. The phenomenon which occurs when this average does not produce the desired result is known as "subject failure."

The apparatus according to the invention includes a color analyzer generally referred to by reference character 100. As used herein, color analyzer refer to electronic apparatus for use in the processing of photographic color film to predict the exposure requirements for producing print materials, i.e. print film or photographic paper, and especially to apparatus of the type for evaluating the exposure and color balance of negative color film in order to obtain an indication of how the printing of the positive color film should be handled in order to obtain suitable color positives from the color negative. In particular, the apparatus according to the invention includes an electronic previewer for simulating an image produced by photofinishing such as disclosed in U.S. Patent No. 2,976,348, incorporated herein by reference. Such analyzers evaluate negative color film and obtain the necessary process control information for the printing of the cu⌐

positive color film or photographic prints. Analyzer 100 includes a scanner 101 or other electro-optic system which optically detects the colors in the film 50 being analyzed and provides a video signal via line 102 corresponding to the color content of the print material, i.e. the print film or photographic paper, which is simulated by the analyzer. The video signal is then processed by printing simulator circuits 103 which include operator controls simulating the exposure of film 50. The particular settings of printing simulator 103 circuits selected by the operator are displayed on display 104 and the video signal acted on by printing simulator circuits 103 is provided via line 106 to color computer 107 including photofinishing simulator circuits. Color computer 107 simulates the photochemical printing development process and provides a video output signal to tricolor display 108. The operator of analyzer 100 views display 108 resulting from film 50 and adjusts the controls of printing simulator 103 until the operator is satisfied with display 108. The operator then reads the control settings from display 104 and uses these settings in the process of developing a positive or print of film 50.

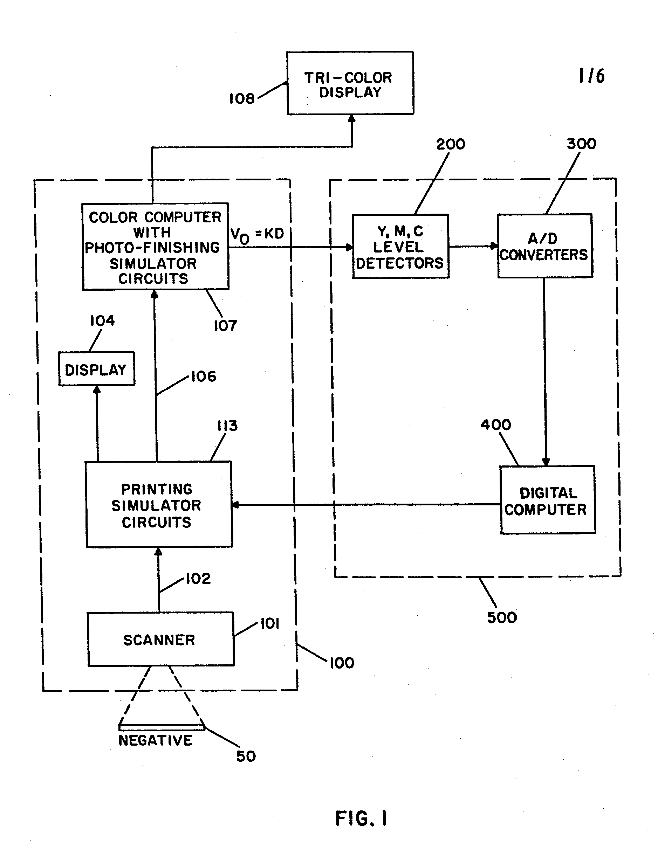

The automatic color correction circuit according to the invention is referred to in figure 1 by reference character 500. It includes peak detectors 200, A/D converters 300 and digital computer 400. As illustrated in figure 1, correction circuit 500 is contemplated for use in combination with color film analyzer 100 for analyzing negative film 50. However, correction circuit 500 may be used in combination with any type of film analyzer.

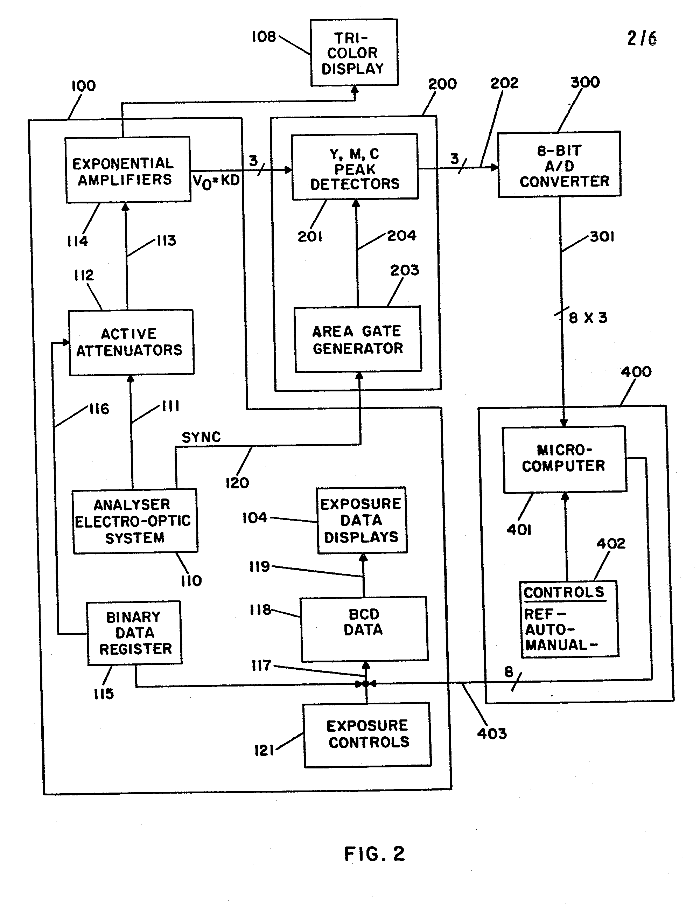

The details of the invention are illustrated in figure 2. Analyzer 100 includes an electro-optic system 110 which scans the film to be analyzed. Electro-optic system 110 scans the film and generates a video signal via line 111 which represents the graphic information (i.e. color content) in the film. During the scanning process, system 110 develops vertical synchronization (sync) and horizontal sync pulses during the raster scan of the film. The video signal representing the color content of the film being analyzed is acted on by active attenuators 112 which are responsive to operator controls. Active attenuators 112 essentially simulate the printing process and permit the operator to determine the best exposure values to be used when the film being analyzed is printed. The attenuated video signal is then provided via line 113 to exponential amplifiers 114 and then to tricolor display 108 for viewing by the operator. As a result, the operator can view the changes resulting from the operator's manipulation of the controls of attenuators 112.

The video signal as provided to exponential amplifiers 114 has three voltage components representing the three basic color components of the print material, i.e. the positive print film or the photographic paper. The magnitude of the voltage of each component is directly proportional to the amount of color (D = dye density) in the print material ($V_o$=KD). In other words, D represents the yellow, magenta and cyan density in the print material. Detectors 200 are yellow, magenta and cyan peak detectors 201 which detect the peak of each color corresponding to each component of the video signal. The detected peaks of each field are provided via line 202 to A/D converter 300 which is an eight-bit analog-to-digital converter. The three eight-bit digital words corresponding to the yellow, magenta and cyan peaks are provided via line 301 to digital computer 400 and specifically microcomputer 401. As a result, microcomputer 401 is provided with three eight-bit words from which the peak black level of the film being analyzed can be determined. There are certain points on the film being analyzed which result in or approach a video signal having an amplitude which is linearly related to the density in the displayed image. These points represent the peak black in the output image and are used as the basis for automatic color correction according to this invention. Essentially, the peak black level is the peak of the levels of the three basic color components.

The invention has been specifically described with regard to automatic color correction based on the peak black level of the video signals which in this case are derived from negative input materials. However, any minimum or maximum, or combination thereof, of the video signal level may be detected and used to achieve automatic color correction in accordance with the invention. For example, minimum video signal levels or average peak levels or a weighted combination thereof may be employed to generate automatic color correction.

The individual yellow, magenta and cyan video signals which are provided to detectors 200 result in the measurement of the peak video amplitude in each channel independently. The DC voltage which is produced by detectors 201 represents the density of the maximum cyan, magenta or yellow signal in the print material. This DC voltage is provided to microcomputer 401 for comparison to a reference code stored therein. The reference codes and the eight-bit words corresponding to the uncorrected film are compared by microcomputer 401. Microcomputer 401 uses the comparative difference to generate a correction signal according to an algorithm such as a standard linear comparison. The correction signals are provided via line 403 to binary data register 115 which in turn provides the information in pulse form via line 116 to active attenuators 112. All correction signals are also provided via line 117 through BCD data register 118 and via line 119 to exposure data display 104.

The operator selects the mode of operation of the automatic analysis system by manipulating the controls 402 associated with microcomputer 401. These controls may include function keys or a standard keyboard permitting entry of commands and other data.

The reference data stored in register 118 may be entered via microcomputer 401 based on previous experience or may be generated by analyzing a reference film. If reference data is to be generated, controls 402 are set to the reference mode, the reference film is placed in the film gate of analyzer 100 and microcomputer 401 then analyzes the reference film and stores the resulting reference data i.e., the peak levels derived from the reference film.

For certain films, it may be desirable to limit the area in which the peak black level is being detected. For example, the black level of a foreground image may be more important than the peak black level of a background image so that only foreground video information should be used for automatic analysis. In such a case, area gate generator 203 may be selectively activated to control which of the video signals are detected by detectors 201. Specifically, vertical and horizontal sync pulses generated by electro-optic system 110 are provided via line 120 to area gate generator 203. Area gate generator 203 is synchronized to the vertical and horizontal sync pulses. Generator 203 provides signals derived from adjustable delay multivibrators used to form a gate (window) which selectively turns peak detectors 201 on or off via control line 204. The area to be detected within a given field is defined by the operator by providing area gate generator 203 with a count of the vertical and horizontal sync pulses which occur during the scanning of the limited area.

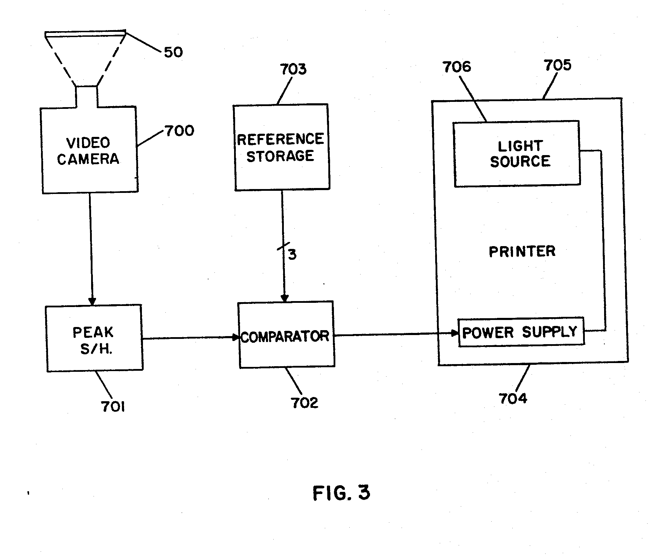

Figure 3 illustrates an automatic correcting printer according to the invention. A color video camera 700 scans film 50 and provides the video signals to peak sample and hold circuits 701.

Peak sample and hold circuits 701 retain the particular minimum or maximum video level which is being used for color correction and provides such to comparator 702 which compares the peaks to a reference held in storage 703. The compared information is then provided to power supply 704 of printer 705 and used to control the output of light source 706 which exposes the film.

The system described in Figures 1-3 may provide incomplete results when analyzing underexposed or overexposed films such as negatives. These results will be manifested in overall density errors or discrepancies in the analysis. With the system of Figures 1-3, underexposed films may be analyzed so that the resulting images are too dark and overexposed films may be analyzed so that the resulting images are too light. Such results can be caused by the distortions in the dynamic range of the underexposed and overexposed negatives when such negatives are printed on the very commonly used photographic papers.

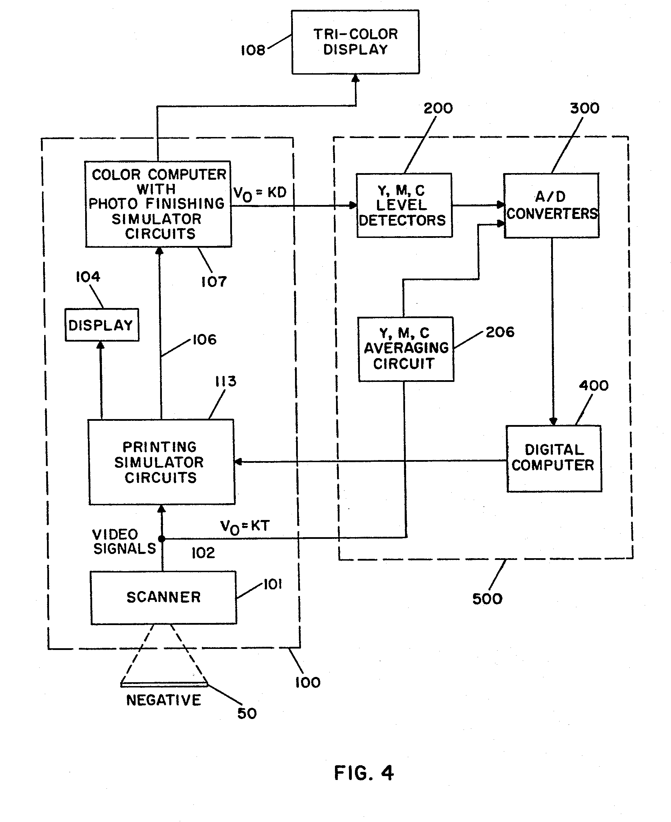

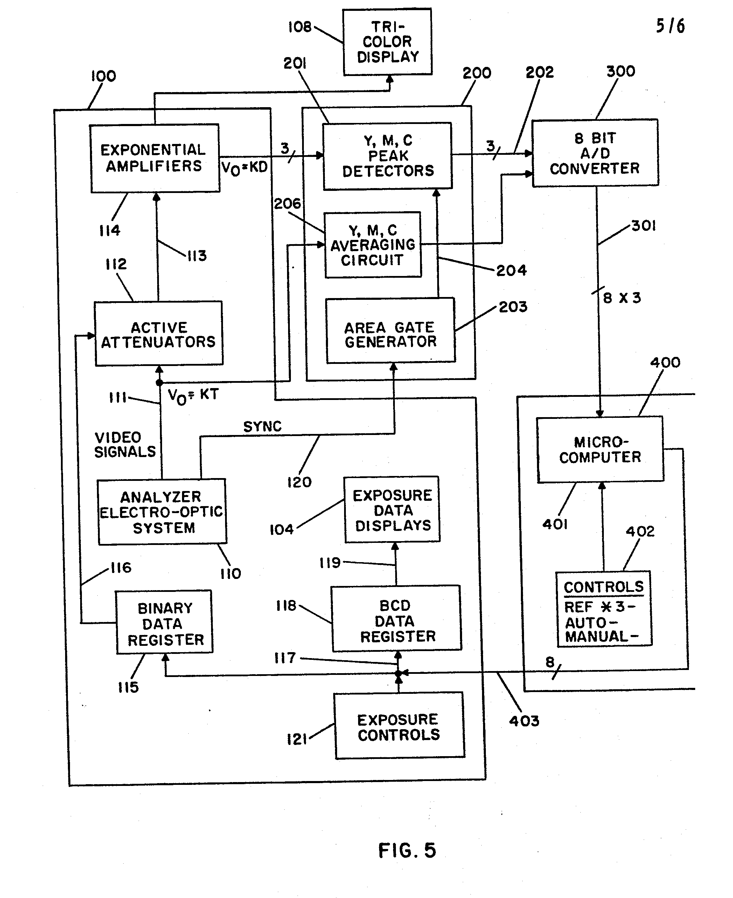

Figures 4-6 illustrate a system which corrects such distortions and allows underexposed and overexposed films such as negatives to be automatically analyzed for proper printing densities. The system of Figures 4-6 uses underexposed and overexposed reference negatives in addition to the normal reference negative to establish corrections to the original automatic system. These corrections are stored in microcomputer 401 and are calculated by an algorithm for each film being analyzed based on the amount that the film which is being analyzed is overexposed or underexposed as compared to the normal negative. The amount of underexposure or overexposure is determined by averaging circuit 206. In particular, the exposure level of the film being analyzed is evaluated by yellow, magenta and cyan averaging circuits which measure the average level of the video before attenuator controls 112. Thus, for an overexposed film, the average value is lower than the normal film and for underexposed films the average value of the light through the film is greater than the normal reference film. To determine the amount of deviation from the normally exposed reference film, a weighted average of the average of the yellow, magenta and cyan transmissions is calculated by microcomputer 401 according to the algorithm resident therein.

A set of films consisting of one normally exposed film and multiple overexposed and underexposed films of the same subject are correctly analyzed in the reference mode. The values read by the yellow, magenta and cyan averaging circuits 206 and the yellow, magenta and cyan peak detectors 200 are stored in microcomputer 401. Subsequently, when an unkown film is analyzed in the automatic mode, the average transmission through the film is calculated and compared to the average transmission of the various reference films and the most appropriate reference film values are selected. Alternatively, microcomputer 401 may be provided with an algorithm which interpolates between the various reference films to select the most appropriate reference value. The yellow, magenta and cyan peak detected color values for the selected reference are then provided via line 403 to satisfy the feedback loop for the color of the unkown film being analyzed.

The system illustrated in Figures 4-6 employs the benefits of peak detecting with the added feature that underexposed and overexposed films are properly read to avoid overall density errors. The corrections which are required are in effect forced by using a predetermined correct result for density only and making the unknown film being analyzed produce the same conditions.

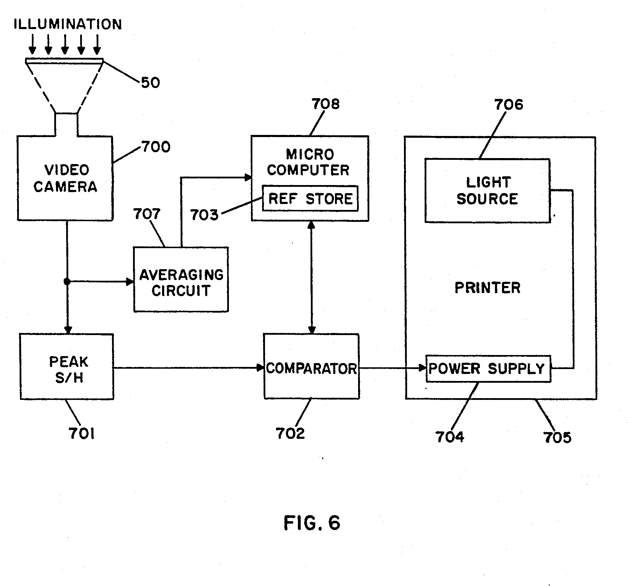

Figure 6 illustrates an automatic correcting printer according to the invention including averaging circuit 707 for evaluating densities. Color video camera 700 scans film 50 and provides the video signals to peak sample and hold circuits 701 and to averaging circuits 707. Peak sample and hold circuit 701 retain the particular minimum or maximum video level which is being used for color correction and provides such to comparator 702. The averaged video information is provided to microcomputer 708 which selects or computes a reference from reference storage 703. Comparator 702 compares the peaks of the selected reference to the video levels held by sample and hold circuit 701. The compared information is then provided to power supply 704 of printer 705 and used to control the output of light source 706 which exposes the film.

After analyzer 100 is calibrated, controls 402 are set to the reference mode and electro-optic system 110 scans the reference film or films. The individual yellow, magenta and cyan video signals derived from the reference film or films are peak detected by detectors 201 and averaged by averaging circuit 206. The detected peaks are converted to eight-bit digital words by converter 300 and stored in microcomputer 401.

Controls 402 are then set for the automatic or manual mode. In the automatic mode, the negative to be analyzed is scanned by electro-optic system 110. The individual yellow, magenta and cyan video signals corresponding to the film are peak detected by detectors 201 and averaged by averager 206. The detected peaks and average are converted to eight-bit digital words by converter 300 and provided to microcomputer 401. Microcomputer 401 selects a reference and compares the eight-bit digital words representing the peaks of the selected reference data to the peaks of the film being analyzed. For example, assume that each yellow, magenta or cyan video signal may be in the voltage range between -5 volts and +5 volts. Assume further that the selected reference indicated a yellow peak of +3 volts, a magenta peak of +2 volts and a cyan peak of +1 volts. Assume further that the film being analyzed indicated a yellow peak of +1 volts or 2 volts below the reference yellow peak. Microcomputer 401 would compare these peaks and upon determining a voltage difference of minus -2 volts would provide data via line 403 to binary data register 115 indicating the correction necessary. This correction may be based on an algorithm stored in microcomputer 401 or may be a linearly related command instructing active attenuators to decrease the voltage of the blue video signal (blue being the complement of yellow) by 2 volts.

Similarly, assuming that the film being analyzed indicates a peak magenta level of 2 volts, microcomputer 401 would compare this to the selected reference magenta level stored therein, determine their equivalence and indicate that no correction is necessary in the green video signal (green being the complement of magenta). Assuming that the film being analyzed has a peak cyan level of +3 volts, microcomputer 401 would provide a correction signal to register 115 based on the difference of +2 volts to correct the red signal (red being the complement of cyan).

Controls 402 may then be set to the manual mode so that the operator may adjust active attenuator 112 directly by adjusting exposure controls 121.

Upon completion of the automatic and optional manual analysis, exposure data display 104 indicates the correction information to be used during the actual printing of the film which was analyzed. Since corrections are stored in both binary data register 115 and BCD data register 118, display 104 indicates the final correction information.

0129446

-18-

The area on the film being considered for generating the peak black level may be limited by providing input information to area gate generator 203. In particular, the gate generator 203 provides pulses which correspond in time to the raster of the limited area. As a result, generator 203 turns detectors 201 on only during that portion of the raster scan which lies within the defined area.

WHAT IS CLAIMED IS:

Claim 1.  An apparatus for automatically analyzing the color content of a first film as compared to at least one reference film characterized by:

a first circuit for determining the peak level of the color content derived from the first film;

a second circuit for determining the peak level of the color content derived from the reference film; and

a circuit for comparing the peak level of the color content derived from the first film to the peak level of the color content derived from the reference film.

Claim 2. The apparatus of claim 1 wherein said first circuit comprises a circuit for generating color representative first video signals corresponding to the color content of the first film and circuit for determining the peak level of the color representative first video signals; and wherein said second circuit comprises a circuit for generating color representative second video signals corresponding to the color content of the reference film and a circuit for determining the peak level of the color representative reference video signals.

Claim 3. The apparatus of claim 2 wherein said second circuit includes a circuit for averaging the video signals and a circuit for selecting the predetermined amplitude dependent upon the averaged video level.

Claim 4. An apparatus of claim 1 for exposing a film comprising:

a circuit for determining the video level of the color content of the film;

a circuit for comparing the video level to a reference;

a light source generating a light output for exposing the film; and

a circuit, responsive to the second circuit, for controlling the light output of the light source.

Claim 5. The apparatus of claim 4 wherein said circuit for comparing includes an averager for averaging the video level of the color content of the film and a selector for selecting the reference dependent upon the averaged video level.

Claim 6. The apparatus of claim 1 including:

a color analyzer having a plurality of adjustable control elements for acting upon color representative video signals derived from a film to vary a video signal characteristic of the video signals and thereby vary the display of the video signal generated by the analyzer; and a first circuit for detecting the video level of the color representative video signals; said apparatus characterized by a second circuit for comparing the detected video level to a predetermined amplitude; and a third circuit, responsive to the second circuit, for adjusting the control elements.

Claim 7. The apparatus of claim 6 further comprising a fourth circuit for designating the color representative video signals which are detected by the first circuit.

Claim 8. The apparatus of claim 6 wherein said second circuit includes an averager for averaging the video signals and a circuit for selecting the predetermined amplitude dependent upon the averaged video level.

Claim 9. The apparatus of claim 8 further comprising fourth circuit for designating the color representative video signals which are detected by the first circuit.

Claim 10. The apparatus of claim 7 or 9 wherein said first circuit comprises a peak level video signal detector providing a peak level analog signal; wherein said second circuit comprises an analog-to-digital converter for converting the peak level analog signals into peak digital signals, a memory for storing digital information corresponding to the digital amplitudes of the predetermined amplitudes, and a computer for comparing the peak digital signals to the digital information stored in the memory; and wherein said third circuit comprises said computer providing a comparative signal output representing any difference between the peak digital signals and the digital information, and a fifth circuit for applying the comparative signal output to the control elements.

Claim 11. The apparatus of claim 10 wherein said fourth circuit comprises a sixth circuit for controlling the color representative video signals which are provided to the peak level video signal detector.

Claim 12. The apparatus of claim 11 wherein said sixth circuit for controlling is a gated generator synchronized with the color analyzer.

Claim 13. The apparatus of claim 7 wherein said color analyzer is for analyzing a film positive, the analyzer having a plurality of attenuators for acting upon yellow, magenta and cyan video signals derived from the positive, the attenuators varying the amplitudes of the yellow, magenta and cyan video signals and thereby varying the display corresponding to the positive generated by the analyzer; wherein said first circuit detects the peak amplitudes of the yellow, magenta and cyan video signals corresponding to the positive; wherein said second circuit compares the detected peak amplitudes to the predetermined amplitudes; and wherein said third circuit adjusts the attenuators.

Claim 14. The apparatus of claim 13 further comprising fourth circuit for designating the video signals which are detected by the first circuit.

Claim 15. The apparatus of claim 14 wherein said first circuit comprises a peak yellow video signal detector, a peak magenta video signal detector and a peak cyan video signal detector for providing a peak level analog signal; said second circuit comprising an analog-to-digital converter for converting the peak level analog signal into a corresponding peak digital signal, a memory for storing digital information corresponding to the digital amplitude of the predetermined amplitudes, and a computer for comparing the peak digital signals to the digital information stored in the memory; and wherein said third circuit comprises said computer providing a comparative signal output representing any difference between the peak digital signals and the digital information and a circuit applying the comparative signal output to the attenuators.

Claim 16. The apparatus of claim 15 wherein said fourth circuit comprises a circuit for controlling the yellow, magenta and cyan video signals which are provided to said peak level video signal detector.

Claim 17. The apparatus of claim 16 wherein said circuit for controlling is a gated generator synchronized with the color analyzer.

Claim 18. The apparatus of claim 7 wherein said color analyzer is for analyzing a film negative, the analayzer having a plurality of attenuators for acting upon yellow, magenta and cyan video signals derived from the negative, the attenuators varying the amplitudes of the yellow, magenta and cyan video signals and thereby varying the display corresponding to the positive generated by the analyzer; wherein said first circuit detects the peak amplitudes of the yellow, magenta and cyan video signals corresponding to the positive; wherein said second circuit compares the detected peak amplitudes to the predetermined amplitudes; and wherein said third circuit adjusts the attenuators.

Claim 19. The apparatus of claim 18 further comprising fourth circuit for designating the video signals which are detected by the first circuit.

Claim 20. The apparatus of claim 19 wherein said first circuit comprises a peak yellow video signal detector, a peak magenta video signal detector and a peak cyan video signal detector for providing a peak black level analog signal; said second circuit comprising an analog-to-digital converter for converting the peak black level analog signal into a corresponding peak black digital signal, a memory for storing digital information corresponding to the digital amplitude of the predetermined amplitudes, and a computer for comparing the peak black digital signals to the digital information stored in the memory; and wherein said third circuit comprises said computer providing a comparative signal output representing any difference between the peak black digital signals and the digital information and means applying the comparative signal output to the attenuators.

Claim 21. The apparatus of claim 20 wherein said fourth circuit comprises a circuit for controlling the red, green and blue video signals which are provided to said peak video signal detector.

Claim 22. The apparatus of claim 21 wherein said circuit for controlling is a gated generator synchronized with the color analyzer.

Claim 23. A method of automatically analyzing the colors of a first film as compared to the colors of a reference film comprising the steps of:

generating color representative reference video signals corresponding to colors of at least one reference film;

determining the peak level of the color representative reference video signals;

generating color representative first
video signals derived from the color of
the first film;

determining the peak level of the color
representative first video signals; and comparing the peak level of the color
representative first video signals to the
peak level the color representative
reference video signals.

Claim 24. The method of claim 23 further comprising the steps of:

averaging the color representative first
video signals; and

selecting the color representative
reference video signals dependent upon the
averaged color representative first video
signals.

1/6

FIG. I

FIG. 2

FIG. 3

FIG. 4

FIG. 5

FIG. 6